# FASCICULE DE BREVET EUROPEEN

(11) **EP 1 815 359 B1**
(45) Date de publication et mention de la délivrance du brevet: **12.05.2021**
(21) Numéro de dépôt: 05818291.6
(22) Date de dépôt: 18.11.2005
(51) Int. Cl.: G06F 11/10, G06F 11/14, G06F 16/182

(54) **SYSTÈME ET PROCÉDÉ DE SAUVEGARDE DISTRIBUÉE PÉRENNE DES DONNÉES**
VORRICHTUNG UND VERFAHREN ZUR VERTEILTEN DAUERHAFTEN DATENSICHERUNG
SYSTEM AND METHOD FOR PERENNIAL DISTRIBUTED DATA BACK UP

(30) Priorité: 26.11.2004 FR 0452788
(43) Date de publication de la demande: 08.08.2007
(73) Titulaire: UGLOO, 75002 Paris (FR)
(72) Inventeur: UTARD, Gil, F-80440 Boves (FR); RANDRIAMARO, Cyril, F-80310 Picquigny (FR)
(74) Mandataire: Novagraaf Technologies
(86) Numéro de dépôt international: PCT/FR2005/002876
(87) Numéro de publication internationale: WO 2006/056681

(56) Documents cités:
- US-A1- 2004 049 700
- US-A1- 2004 064 693
- BOLOSKY W J; DOUCEUR J R; ELY D; THEIMER M: "Feasibility of a serverless distributed file system deployed on an existing set of desktop PCs" PERFORMANCE EVALUATION REVIEW, vol. 28, no. 1, juin 2000 (2000-06), pages 34-43, XP002344594 USA
- ADYA A; BOLOSKY W J; CASTRO M; CERMAK G; CHAIKEN R; DOUCEUR J R; HOWELL J; LORCH J R; THEIMER M; WATTENHOFER R P: "FARSITE: Federated, Available, and Reliable Storage for an Incompletely Trusted Environment" PROCEEDINGS OF THE FIFTH SYMPOSIUM ON OPERATING SYSTEMS DESIGN AND IMPLEMENTATION, 2002, pages 1-14, XP002344595 Berkeley, CA, USA
- MUTHITACHAROEN A; MORRIS R; GIL T M; CHEN B: "Ivy: a read/write peer-to-peer file system" PROCEEDINGS OF THE FIFTH SYMPOSIUM ON OPERATING SYSTEMS DESIGN AND IMPLEMENTATION, 2002, pages 31-44, XP002344596 Berkeley, CA, USA
- KUBIATOWICZ J ET AL: "OceanStore: An Architecture for Global-Scale Persistent Storage", ASPLOS. PROCEEDINGS. INTERNATIONAL CONFERENCE ON ARCHITECTURALSUPPORT FOR PROGRAMMING LANGUAGES AND OPERATING SYSTEMS, NEW YORK, NY, US, 1 January 2000 (2000-01-01), pages 1-12, XP002993765,
- WEATHERSPOON H ET AL: "Silverback: A global-scale archival system", ACM SOSP. PROCEEDINGS OF THE ACM SYMPOSIUM ON OPERATING SYSTEMSPRINCIPLES, ACM, US, 1 March 2001 (2001-03-01), pages 1-15, XP002302722,
- ZHAO B Y ET AL: "Tapestry: An Infrastructure for Fault-tolerant Wide-area Location and Routing", REPORT UCB/CSD-01-1141, XX, XX, 1 April 2001 (2001-04-01), pages 1-27, XP002995768,

## Description

La présente invention se rapporte au domaine des réseaux informatiques et de la sauvegarde des données numériques sur de tels réseaux.

La présente invention concerne plus particulièrement un procédé, un système et un dispositif pour la sauvegarde distribuée des données sur un réseau ne comprenant pas de serveur dédié aux opérations de sauvegarde. L'invention proposée assure une distribution des tâches de sauvegarde sur l'ensemble des éléments de stockages connectés au réseau, tout en mettant en œuvre des mécanismes de pérennisation des données de commande et de contrôle ainsi que des données numériques stockées.

Le but est de créer un réseau pair à pair, où de nombreux terminaux connectés à Internet s'associent pour fournir un service de stockage pérenne. Chaque micro-ordinateur jouera le rôle de périphérique de stockage. Si le micro-ordinateur est en panne, volé ou détérioré, son remplacement par un neuf permettra malgré tout de retrouver l'information stockée.

L'art antérieur connaît déjà, par la demande de brevet américain US 2004 / 0 049 700 (Takeo Yoshida), un procédé de stockage de données à faible coût utilisant les capacités disponibles des ordinateurs personnels connectés au réseau. Lorsqu'un client de sauvegarde d'un PC utilisateur reçoit une instruction de sauvegarde d'un fichier par un utilisateur, le client de sauvegarde fait une demande de sauvegarde auprès du serveur de commande de sauvegarde. Ce serveur divise et chiffre le fichier à sauvegarder en une pluralité de pièces chiffrées, transfert les pièces chiffrées aux PC utilisateurs et stocke la pièce chiffrée dans le disque dur des PC utilisateurs. Lorsque le fichier sauvegardé de façon distribuée doit être extrait, le PC utilisateur obtient chaque pièce chiffrée des autres PC utilisateurs sur lesquels elles ont été stockées, et les combine et déchiffre les pièces pour restaurer le fichier original.

La solution proposée est de distribuer le stockage des données par une dispersion des données sur un ensemble de périphériques connectés au réseau. Cependant ce système nécessite une forte disponibilité des périphériques, ou tout du moins qu'ils soient activables à distance, pour accéder aux données. L'autre inconvénient de ce système est qu'il ne permet pas de faire face à la défaillance des périphériques de stockage, et la perte des données sur un périphérique de stockage est irrémédiable. Enfin ce système ne passe pas à l'échelle car la coordination du stockage est assurée par un serveur par lequel transite toutes les données.

L'art antérieur connaît également, par la demande de brevet PCT WO 02 / 063 484 (SS8 Networks), un système de stockage de données réparties à architecture hautement évolutive et hautement disponible. Dans un mode de réalisation de l'invention, ce système de stockage de données réparties comprend une pluralité d'unités de stockage de données qui sont commandées par un système de gestion d'objets. Ce système de gestion d'objets sélectionne des unités de stockage de données pour réaliser les demandes d'accès d'un fichier en fonction des entrées/sorties auxquelles ces demandes d'accès de fichiers sont associées. En réponse à une demande de création d'un fichier associée à une entrée externe d'une unité de stockage de données réparties, le système de gestion d'objet crée de préférence un fichier de données dans cette unité de stockage de données réparties. En réponse à une demande de localisation de fichier associée à un fichier de données et à une sortie externe d'une unité de stockage de données réparties, le système de gestion d'objet retourne de préférence un nom d'hôte et un nom d'accès d'une copie du fichier de données qui est stocké dans cette unité de stockage de données réparties. Ce système de gestion d'objet fait aussi des copies redondantes des fichiers de données dans différentes unités afin d'offrir une haute disponibilité.

Dans cette demande de brevet, le système réalise un stockage distribué redondant nécessitant néanmoins un système de gestion centralisé assimilable à un serveur de gestion. La solution proposée n'est pas viable sans la présence de ce serveur, ce qui la rend extrêmement dépendante du bon fonctionnement du serveur.

On connaît également, par la demande de brevet américain US 2002 / 0 114 341 (Andrew Sutherland et autres), un système de mémoire pour entités homologues comprenant un coordinateur de mémoire gérant de manière centralisée des ressources mémoire réparties conformément à des règles de système administrées par l'intermédiaire d'une console administrative centrale. Les ressources mémoire sont des portions inutilisées des moyens de stockage, par exemple, les disques durs qui sont inclus dans les dispositifs tels que les ordinateurs personnels, les stations de travail, les ordinateurs portables, les serveurs de fichiers, etc., qui sont connectés à un réseau informatique.

Cette demande de brevet propose un stockage distribué sur un réseau nécessitant la présence d'un coordinateur de stockage (*storage coordinator*), sorte de serveur, qui assure la distribution des données à stocker sur les différents dispositifs ou nœuds du réseau.

De même, la demande de brevet américain US 2004 / 064 693 (Akhil K. Arora et autres) porte sur un mécanisme d'indexation distribué pour indexer et rechercher les informations d'authentification dans les réseaux pair-à-pair. Un index distribué, de type DHT, peut être utilisé pour stocker l'information d'identité de façon décentralisé sur une pluralité de nœuds pairs. L'information d'identité peut être utilisée par exemple pour authentifier les utilisateurs. Des index distribués permettent à l'information d'identité d'être diffusée à travers de multiples nœuds pairs de telle sorte que la charge soit diffusée parmi les nombreux nœuds pairs.

Cette demande propose d'utiliser la DHT pour mettre en place un mécanisme d'identification (d'utilisateurs ou autre) distribué. Les pairs d'une DHT sont rendus actifs (par les demandes d'information d'authentification) pour ne pas restreindre le stockage à un simple stockage passif, mais leur utilisation ne dépasse pas ce cadre et ne permet pas la détection de pannes sur un autre nœud.

On connaît également, dans l'état de la technique, les réseaux pair-à-pair (*peer-to-peer*) utilisant les tables de hashage distribuées, aussi appelées DHT (*Distributed Hash Table*) telles que Chord, CAN, Pastry ou Tapestry, pour réaliser un stockage distribué des données.

L'utilisation des DHT dans de tels réseaux offre un mécanisme de routage entre les pairs par un sur-réseau ou *overlay* tolérant aux pannes et une plus grande résistance aux attaques liée à l'association routage-overlay. Elle offre également un dictionnaire distribué et redondant sur ce sur-réseau : chaque entrée de ce dictionnaire est composée d'une clé et d'un objet associé (par exemple un fichier de données numériques). L'objet est inséré dans la DHT qui le réplique sur différents nœuds afin d'assurer un certain niveau de tolérance aux pannes. L'utilisation de la DHT offre également une organisation logique des données : un identificateur unique est affecté à chacun des pairs, idéalement les identificateurs sont choisis de telle manière que ceux-ci soient les plus dispersés possible dans l'espace des noms disponibles, et une fonction (par exemple l'identité) projette l'espace des clés du dictionnaire dans l'espace des noms des pairs. Lors de l'insertion d'un nouvel objet dans le dictionnaire DHT, le pair qui le stockera est celui qui sera atteint par l'algorithme de routage en fonction de la clé projetée de l'objet dans l'espace des noms ; en général, l'algorithme de routage désigne le pair qui a l'identifiant le plus proche de la projection de la clé. L'objet inséré est répliqué par la DHT pour faire face à la disparition de pairs. Typiquement, chaque pair maintient une liste des pairs qui ont un identifiant « voisin » (au sens de l'algorithme de routage) dans l'espace des noms, l'objet est alors dupliqué sur ces pairs. Les mécanismes connus associés aux DHT permettent de gérer les données par de simples primitives telles que *search, put, get, free,* ...

Une autre limitation concerne l'utilisation « lourde » des DHT : elles stockent les données, ce qui accroît conséquemment le trafic sur le réseau lorsque des requêtes sont émises.

L'état de la technique connait également le document « OceanStore: An Architecture for Global-Scale Persisent Storage » de Kubiatowicz et al., XP002993765, ou encore le document « Tapestry: An Infrastructure for FAult-tolerant Wide-Area Location and Routing » de Zhao B Y et al., XP002995768. Ces deux propositions ne permettent toutefois pas, notamment, de gestion des pannes des nœuds de la DHT.

La présente invention entend remédier aux inconvénients de l'art antérieur en proposant un procédé de sauvegarde distribuée sur un réseau informatique basé sur l'utilisation des tables de hashage distribuées pour stocker de façon pérenne les informations de commande et de contrôle ou de gestion de stockage. On entend par informations de commande et de contrôle ou de gestion toutes les données associées aux données à stocker, aux nœuds du réseau qui sont utilisées lors du stockage ou lors de la récupération des données.

Le procédé selon la présente invention répond particulièrement bien aux problématiques des réseaux informatiques actuels : évolution du réseau par ajout/retrait de nouveaux nœuds, sécurité contre les attaques, protection des données, redondance des informations de stockages, pérennisation des données lors de pannes ou défaillances.

À cet effet, l'invention concerne dans son acception la plus générale un procédé de sauvegarde distribuée d'un bloc B de données numériques sur un réseau informatique tel que défini par l'objet de la revendication 1.

Selon un mode de réalisation, ledit procédé comprend, suite à ladite étape de division, une étape de calcul de s fragments de redondance calculés à partir desdits r fragments F.

Selon un mode de réalisation particulier, lesdits fragments sont stockées, lors de l'étape de stockage, sur des nœuds tous différents.

Particulièrement, la DHT ne contient que des données de contrôle et aucun fragment de données.

Selon une mise en œuvre, ledit procédé comprend, en outre, une étape d'envoi périodique par chacun desdits nœuds d'une information d'activité à un ensemble de nœuds sélectionnés par la DHT.

Particulièrement, ledit procédé comprend, en outre, une étape de reconstruction des données stockées sur ledit noeud en panne Cₚₐₙₙₑ et de mise à jour, dans la DHT, de la liste des noeuds stockant au moins un fragment dudit bloc B.

Dans un mode de réalisation, les fragments reconstruits lors de ladite étape de reconstruction sont stockés chacun sur au moins un autre nœud sain.

L'invention concerne également un dispositif de sauvegarde distribuée de données pour la mise en œuvre du procédé comprenant un processeur, une mémoire de stockage, des moyens de connexion au réseau et des moyens de contrôle des données distribuées, du type table de hashage distribuée DHT.

Selon un mode de réalisation, ledit dispositif est sous forme d'un boîtier externe que l'on ajoute à un poste informatique déjà existant.

L'invention concerne également un système de sauvegarde distribuée comprenant au moins deux dispositifs précédents connectés entre eux par un réseau informatique.

Particulièrement, ledit système comprend une pluralité de dispositifs selon l'une des revendications 6 ou 7, lesdits dispositifs étant connectés à plusieurs réseaux interconnectés.

On comprendra mieux l'invention à l'aide de la description, faite ci-après à titre purement explicatif, d'un mode de réalisation de l'invention, en référence aux figures annexées :
- la figure 1 représente l'architecture globale d'un réseau pair-à-pair selon la présente invention ;
- la figure 2 illustre l'architecture logicielle du système ;

- la figure 3 illustre l'architecture du dispositif de stockage distribué ;
- la figure 4 représente un exemple de structure de la table de hashage distribuée ;
- la figure 5 illustre la réplication et la décomposition d'un bloc de données avant le stockage distribué ;
- la figure 6 illustre la surveillance des pairs du réseau par la mise à jour dynamique de la DHT par chaque pair ;
- la figure 7 illustre les échanges entre les différents éléments du réseau lors de l'initialisation du réseau ;
- la figure 8 illustre les échanges lors de l'écriture (sauvegarde) de données sur le réseau selon la présente invention ;
- la figure 9 illustre les échanges lors de l'étape de récupération de données dans le réseau ;
- la figure 10 représente les échanges entre les différents éléments du réseau lors de la reconstruction des données « perdues » d'un pair défaillant.

La présente invention propose un procédé, un système et un dispositif de stockage distribué et pérenne de données pair à pair utilisant l'espace disque disponible sur des pairs pour y entreposer les données des utilisateurs. La solution proposée permet de proposer un système de stockage indépendant de la robustesse de composants locaux (typiquement le disque dur). Les données sont à l'abri d'une détérioration accidentelle (incendie) ou autre (vol du matériel par exemple).

La disponibilité des données est également garantie par le système qui met en œuvre son processus de réplication dès lors qu'il est connecté au réseau. La propriété de sauvegarde en temps réel et la disponibilité des données ne sont pas assurées dans la plupart des systèmes de sauvegarde qui réalisent des copies des données à protéger à intervalles réguliers (sauvegarde de type incrémentale sur CD-Rom ou réseau).

La pérennité est, quant à elle, assurée par les propriétés de tolérance aux fautes, mises en œuvre en particulier par la fragmentation des données et l'ajout de redondance, le tout associé à un mécanisme de détection de pannes et de réparation dynamique des fragments perdus.

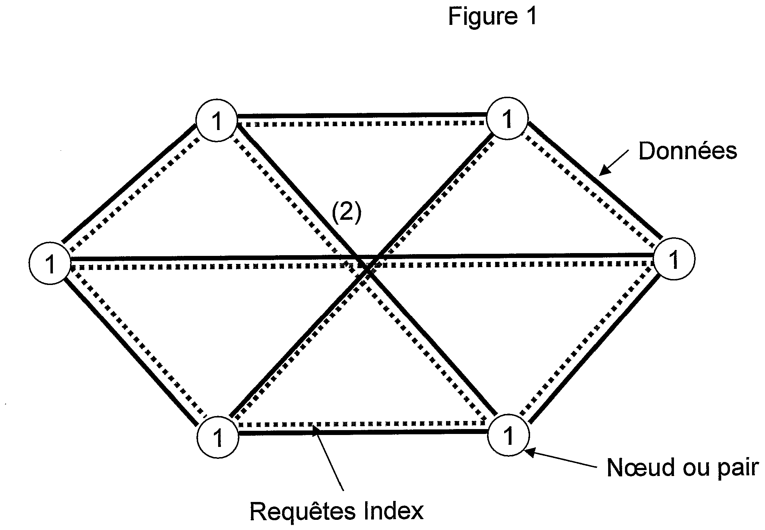

La figure 1 illustre l'architecture des systèmes pair-à-pair selon la présente invention. Une pluralité de pairs (1) sont connectés à un réseau (2) constituant un réseau maillé. Les données numériques à sauvegarder peuvent circuler sur toutes les branches du réseau. Les données de contrôle (ensemble des informations de gestion des données stockées de façon distribuée) circulent sur le même réseau par un mécanisme adapté : celui des DHT comme décrit dans l'art antérieur. Toute requête sur la DHT est réalisée par n'importe quel chemin du réseau au même titre qu'une donnée est envoyée sur le réseau. On entend par « pair » tout nœud du réseau pouvant être simplement un ordinateur. Les réseaux pair-à-pair se basent sur une égalité entre tous les nœuds du réseau, c'est-à-dire que chacun des postes informatiques joue le même rôle que les autres. Ce système ne comporte aucun serveur centralisant une quelconque opération ou gestion de stockage. Certains serveurs dédiés à d'autres tâches peuvent être présents sur le réseau sans altérer le fonctionnement de l'invention : ils sont vus comme de simples pairs du réseau.

Le réseau (2) utilisé peut être simplement un réseau d'entreprise, mais sera idéalement l'Internet. Dans ce cas, la présente invention offre une solution de stockage distribué sur toute la planète.

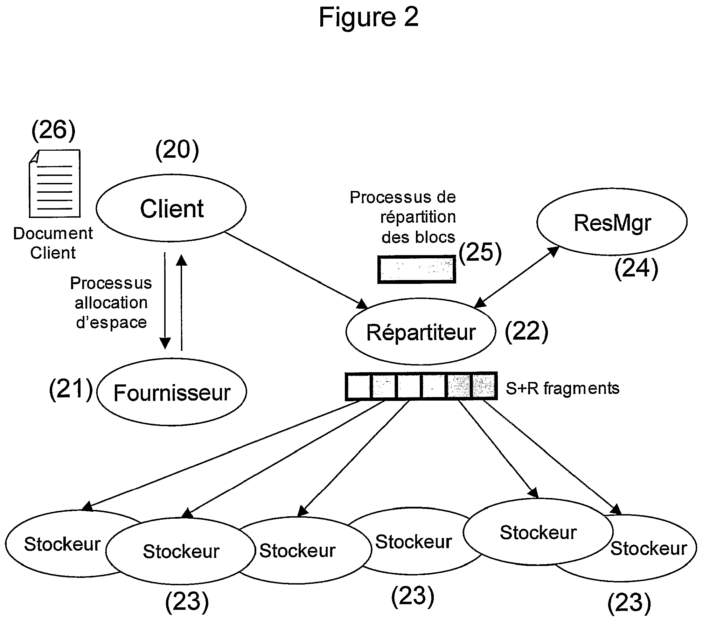

La figure 2 illustre l'architecture logicielle du système au niveau d'un poste client (nœud du réseau).

Le système selon la présente invention se compose de deux entités principales : un **Client** (20) qui est un demandeur d'espace et un **Fournisseur** (21) qui alloue et gère l'espace. L'invention réalise un stockage de bas niveau : le système peut être vu comme un disque dur virtuel. Le Client peut être un système de fichiers spécifique (CFS, NFS, Fuse, ...) interfacé avec le réseau pour permettre à l'utilisateur de gérer ses données sous forme de fichier. Le réseau selon la présente invention est inter-opérable avec d'autres systèmes de stockage, tel que IBP (*Internet Backplane Protocol*), Past...

Prenons par exemple un utilisateur qui envoie son fichier (26) au système de fichiers, interfacé avec la présente invention. Ce fichier est découpé en blocs (25) qui sont ensuite envoyés au **Répartiteur** (22). Ce dernier détient les informations sur les ressources disponibles en interrogeant le **Manager des Ressources** (24). Le Répartiteur découpe les blocs en fragments en incluant des fragments de redondance et de correction (Reed-Salomon). Finalement il répartit ces fragments sur des pairs dédiés au stockage, les **Stockeurs** (23), qui sauvegardent localement les fragments.

La gestion de l'espace de stockage partagé repose donc sur trois applications différentes :
▪ le **Client** (20) est l'interface utilisateur pour demander de stocker des blocs, de les récupérer ou de les effacer ;
▪ le **Répartiteur** (22) est le fournisseur de service, il détient et gère les informations sur les ressources ; et
▪ le **Stockeur** (23) est le pair qui enregistre les données sous forme de fragments sur le disque dur local.

Chacun des nœuds du réseau dispose de ces trois applications puisqu'ils sont tous susceptibles de jouer le rôle de demandeur ou de stockeur.

Le Manager des Ressources (24) est l'organe central de la gestion du système. Il mémorise l'état de chaque Stockeur (il connaît la liste de tous les fragments archivés sur les Stockeurs), prend en charge la détection des nœuds morts et active la reconstruction des fragments lors de la disparition des Stockeur. Dans l'art antérieur, le Manager de Ressources (24) repose sur des serveurs dédiés : la gestion du système est concentrée sur le Manager des Ressources et constitue donc un point faible dans l'architecture du système puisque sa position centrale en fait une cible privilégiée pour une attaque de *Denis de Service.* La présente invention propose de distribuer les fonctions du Manager des Ressources (24) sur l'ensemble des clients (nœuds) du réseau afin d'améliorer la résistance du système à la défaillance simultanée (volontaire ou accidentelle) d'un nombre important de pairs. Ces moyens distribués mémorisent l'état de chaque Stockeur, possèdent la liste de tous les fragments archivés sur les Stockeurs, prennent en charge la détection des nœuds morts et activent la reconstruction des fragments lorsque cela est nécessaire pour préserver la pérennité des données.

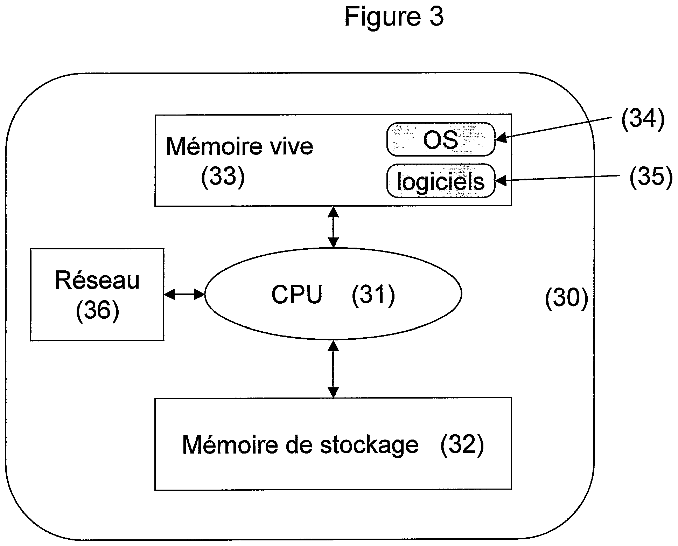

Dans un mode de réalisation illustré par la figure 3, le dispositif de stockage (30) selon la présente invention se compose d'un processeur CPU (31) contrôlant une mémoire vive (33) de type RAM *(Random Access Memory),* une mémoire de stockage (32) de type disque dur et des moyens de connexion au réseau (36), par exemple une carte réseau. Un système d'exploitation (34) est exécuté sur le processeur et permet aux applications (35) mentionnées précédemment d'être exécutées. Par exemple, une carte mère de faible dimension et de faible consommation, avec un processeur type x86, une mémoire vive, un disque dur et une carte réseau (par exemple *fast ethernet*)*.* Le tout est intégré dans un boîtier de faible dimension. Le boîtier est connecté au réseau local de l'entreprise et peut aussi accéder au réseau des autres boîtiers similaires (par exemple sur Internet) pour assurer le service de stockage.

Ce dispositif peut être intégré dans un ordinateur déjà existant. Pour garantir la sécurité de l'invention, le dispositif peut consister en un boîtier externe ajouté à un nœud du réseau, le boîtier pouvant utiliser, selon le mode de réalisation choisi, certaines ressources de l'ordinateur (connexion réseau par exemple).

La présente invention propose un mécanisme permettant de distribuer le Manager des Ressources (24) précédemment évoqué. Ce mécanisme tend à porter sur les pairs du réseau l'ensemble de la gestion des ressources. De nouvelles architectures proposent des mécanismes de routage entre les pairs basés sur un sur-réseau (*overlay*) et ainsi que des systèmes de gestion des ressources reposant sur des tables de hashage distribuées ou DHT (*Distributed Hash Table*). Comme évoquée dans l'art antérieur, l'utilisation des DHT pour le stockage distribué offre une réplication des données afin d'assurer une tolérance aux pannes.

Dans une DHT, la complexité en communication est fonction du nombre de pairs et des données, ce qui engendre un surcoût non négligeable en termes de communication dans le réseau. En particulier lorsque la taille des données est considérable, ce qui est le cas pour un réseau de sauvegarde distribuée. C'est pour cette raison que la DHT selon la présente invention est utilisée uniquement pour stocker des méta-données, qui ont une taille beaucoup moins importante que les données elles-mêmes. On entend par méta-données les données de contrôle de la distribution du stockage (données portant sur les nœuds, sur les fragments de données sur chaque nœud, ...). La DHT a aussi un rôle de cache mémoire afin d'augmenter les performances globales du système.

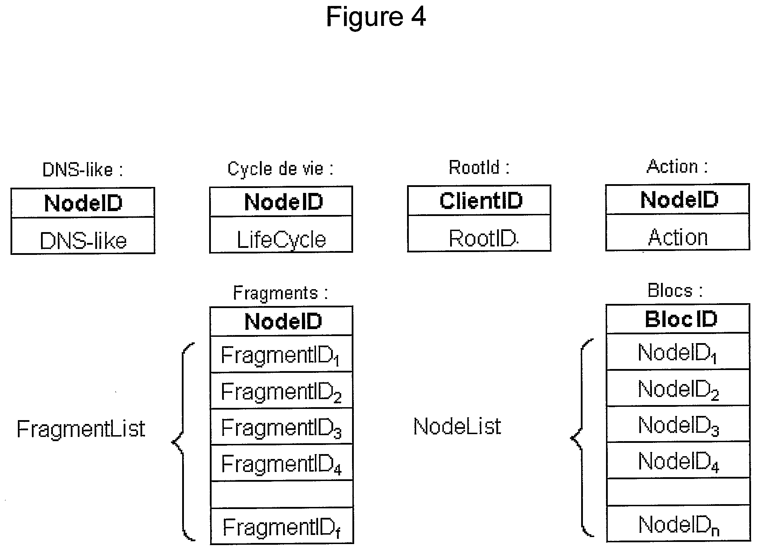

Illustrée par la figure 4, la table de hashage distribuée comporte six objets :
▪ **DNSlike** : cet objet fait le lien entre le NodeID (l'identifiant du nœud) et l'adresse physique (l'adresse IP) de chaque pair ;
▪ Cycle de vie **(LifeCycle)** : chaque pair, représenté par son NodeID, stocke régulièrement un message de présence, ce message représente son cycle de vie ;
▪ **RootID** : lors du stockage d'un bloc, le pair Client stocke son RootID qui représente le pointeur sur le Bloc Racine contenant toutes les informations nécessaires pour récupérer l'ensemble des blocs du client ;
▪ **Action** : le Répartiteur stocke les commandes non encore exécutées. En cas de panne du Répartiteur, celui-ci pourra toujours rééxecuter les commandes pendantes. L'exemple le plus courant est l'effacement des blocs : si des Stockeurs ne sont pas disponibles, il est nécessaire de pouvoir rééxecuter ultérieurement la commande ;
▪ **Fragments** : chaque Stockeur stocke au sein d'une DHT la liste de tous ses fragments ; et
▪ **Blocs** : lors du stockage d'un bloc, le pair client stocke la liste des NodeID contenant les fragments du bloc identifié par son BlocID (identifiant unique du bloc).

Les quatre premiers objets ont pour but la collecte d'informations fonctionnelles et comportementales des pairs, tandis que les deux derniers concernent le stockage des données sur les différents pairs.

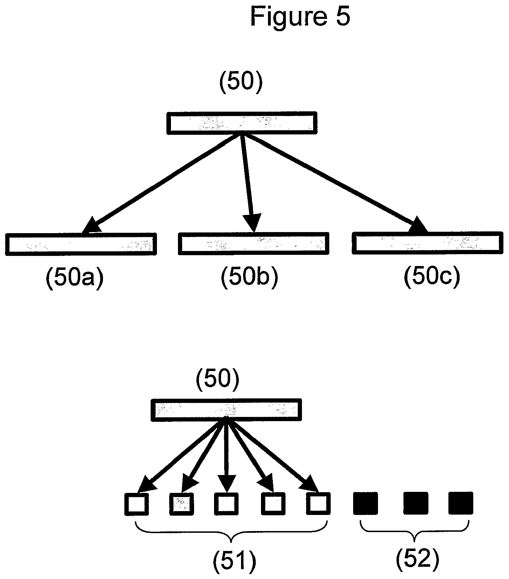

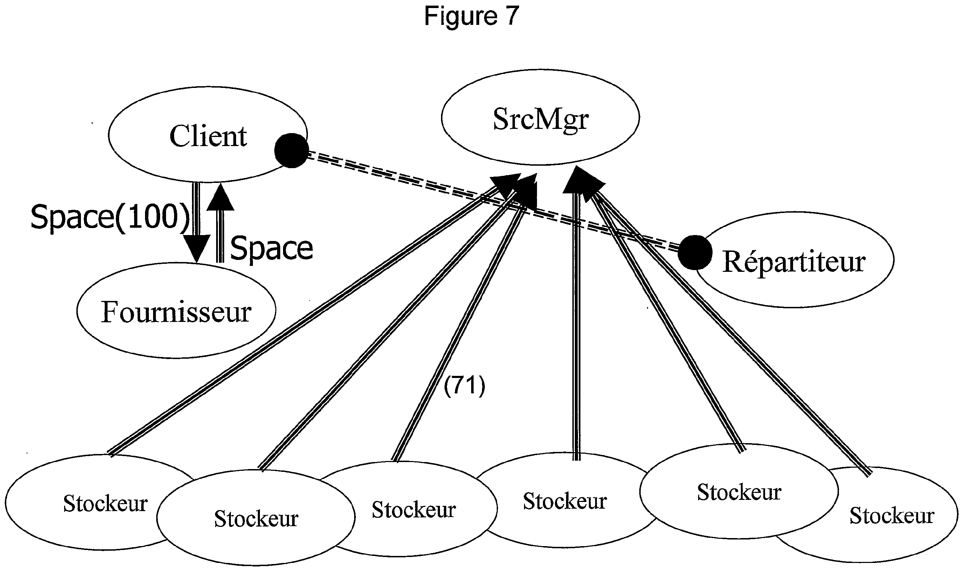

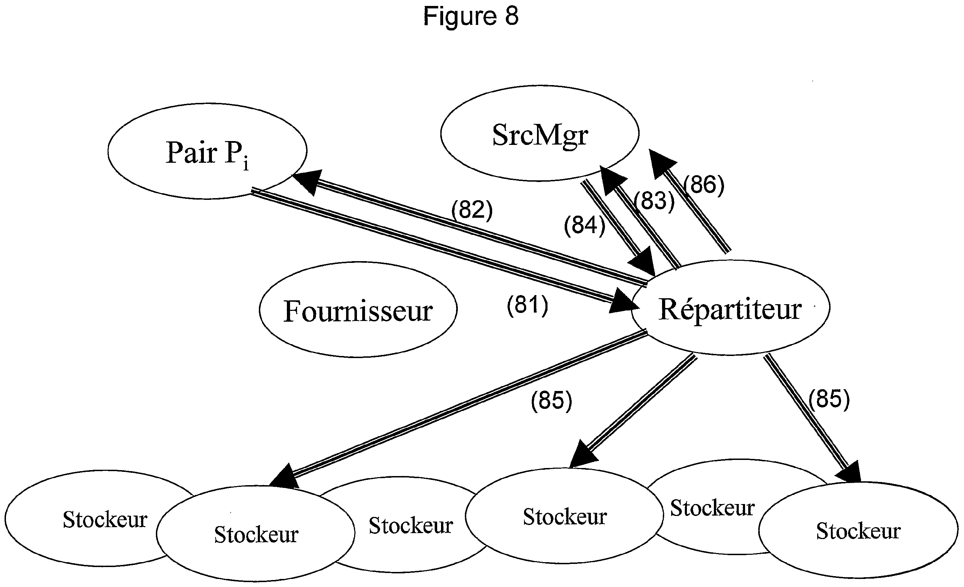

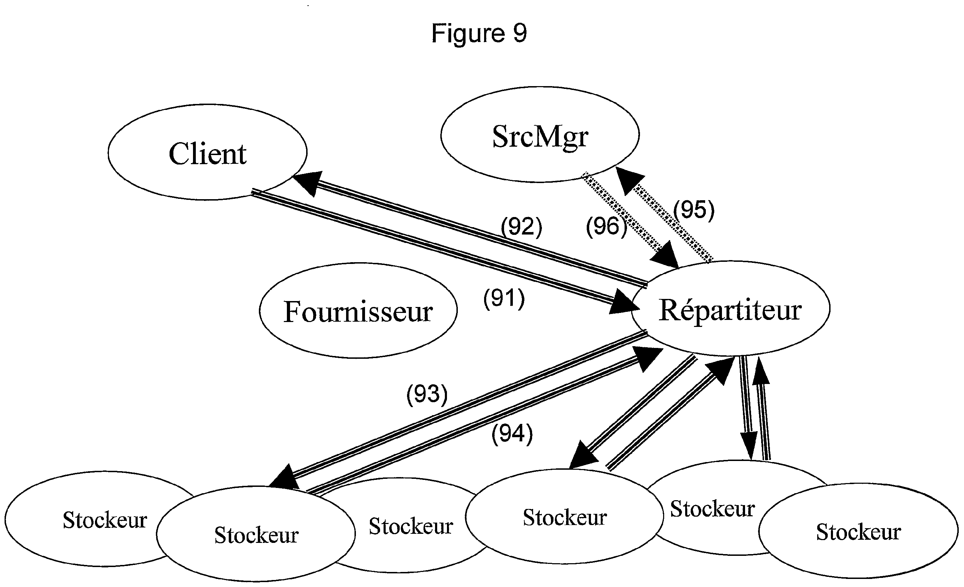

Les différentes étapes mises en œuvre dans la présente invention sont les suivantes :
▪ L'étape d'initialisation lorsqu'un nouveau pair incorpore le réseau est illustrée par la figure 7. Chaque client qui servira de points d'entrée à l'*overlay* calcule son NodeID en fonction d'une certaine métrique, par exemple en fonction de sa géolocalisation. Cet identifiant est conservé pendant toute la vie du pair. Les pairs sont ajoutés un par un dans *l'overlay.* Chaque pair en passe d'intégrer le réseau calcule un NodeID unique. Les pairs contactent le point d'entrée le plus proche numériquement dans la liste qu'il connaît et s'insère en fonction de son NodeID dans l'*overlay* et reconstitue sa propre table de routage à l'aide de ses voisins. À la naissance d'un pair, en plus de son identifiant unique le NodeID, le pair obtient une liste de BlocID. Les différents nœuds du réseau mettent à jour (71) le Manager de Ressources, i.e. la DHT.
▪ L'étape de maintenance qui consiste à ce que chaque pair stocke ou met à jour au sein de la DHT son objet DNSlike qui contient les informations concernant l'association de son NodeID avec son IP, ainsi que son cycle de vie. De cette manière pour savoir quand un pair se déconnecte où s'il est en panne, il suffit de lire la DHT. Étant donné qu'il est possible de récupérer la liste des fragments qu'un pair possède : la reconstruction des fragments perdus par la perte d'un pair est toujours possible.
▪ L'étape de stockage d'un bloc est illustrée par la figure 8 : un pair Pᵢ souhaite stocker un bloc Bᵢ. Illustré par la figure 5, le bloc à stocker (50) peut être répliqué en plusieurs blocs (50a, 50b et 50c) pour autoriser une tolérance aux pannes (ici deux blocs peuvent être perdus sans altérer les données). Il calcule un numéro de groupe virtuel en fonction du BlocID. Puis le pair Pᵢ obtient par la DHT la liste des NodeID des Stockeurs correspondant au groupe virtuel GVᵢ={P₁; ... ;P_{f}}. Un groupe virtuel est un ensemble de f pairs sélectionnés de façon à minimiser la corrélation de mort simultanée. De façon plus détaillée :
   - Client : Le pair client Pᵢ envoie un bloc Bᵢ à un Répartiteur (81).
   - Répartiteur : Le Répartiteur découpe le bloc reçu (50) Bᵢ en f fragments : s fragments de segmentation (51) et r fragments de redondance (52) (par exemple une redondance Reed-Salomon), comme illustré sur la figure 5. Ensuite le Répartiteur envoie une requête (83) de recherche d'un pair, de P₁ jusque P_{f}. Les NodeID obtenus (84) serviront à la composition du groupe virtuel associé au stockage du bloc Bᵢ. Le Répartiteur stocke (85) les fragments sur les pairs indiqués, nommés Stockeurs.
   - Stockeur : il stocke des fragments issus de divers blocs. Les Stockeurs mettent à jour leur liste de fragments et la communique à la DHT. Chaque Stockeur envoie un acquittement au Répartiteur lors de la réception d'un fragment.
   - Répartiteur : après validation des opérations précédentes par les acquittements, le Répartiteur stocke (86) dans une DHT, avec pour clé le BlocID, les NodeID correspondant aux Stockeurs stockant le BlocID. Enfin le Répartiteur informe (82) le client du bon déroulement du stockage de son bloc Bᵢ par l'envoi d'un acquittement.
▪ L'étape de récupération/réception d'un bloc est illustrée par la figure 9 : un pair Pᵢ souhaite recevoir son bloc Bᵢ préalablement stocké. L'action se déroule de la façon suivante :
   - Client : Le pair client envoie une demande de réception (91) du bloc Bᵢ au Répartiteur.
   - Répartiteur : Le Répartiteur envoie une requête à la DHT (95) pour demander le BlocID correspondant, la DHT lui renvoie (96) la liste des NodeID stockant les fragments composant les blocs.
      Le Répartiteur interroge alors la DHT pour connaître les IP des Stockeurs en fonction des NodeID donnés. Le Répartiteur demande les fragments aux Stockeurs correspondants aux NodeID fournis :
   - Stockeur : A la demande du Répartiteur (93), il envoie (94) le fragment stocké.
   - Répartiteur : Lorsque le Répartiteur a reçu s fragments parmi les s + r, les fragments sont alors utilisés pour reconstruire le bloc Bᵢ. Le Répartiteur envoie le bloc Bᵢ au Client (92).

La présente invention concerne également les mécanismes permettant de surveiller en permanence l'état du réseau et des pairs, et de procéder, le cas échéant, à la reconstruction des données perdues par la défaillance d'un ou plusieurs éléments du réseau.

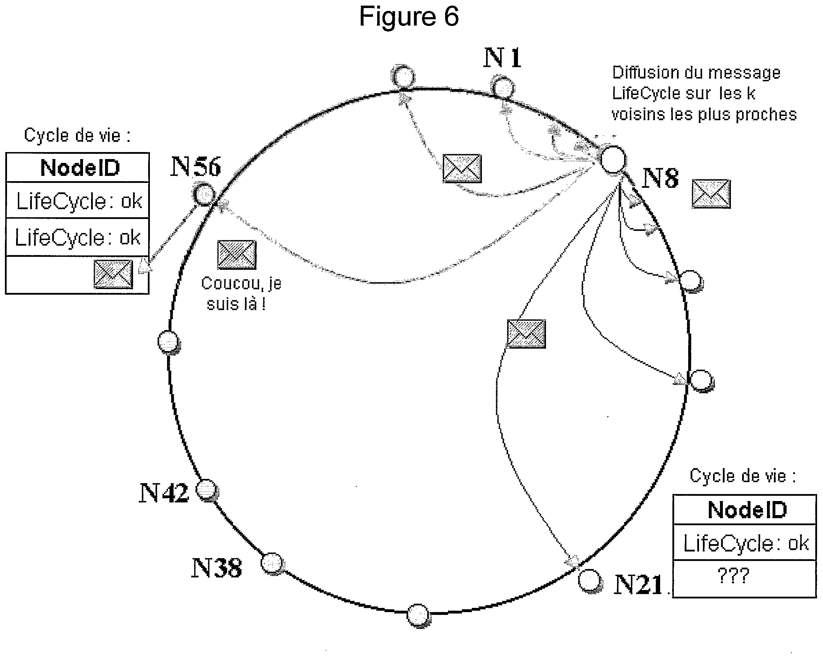

La surveillance des pairs s'appuie toujours sur la DHT, et plus précisément sur l'objet **LifeCycle** de chacun des pairs, comme illustré par la figure 6. La DHT met en place le procédé de duplication des données de contrôle qui font que plusieurs pairs vont recevoir le "cycle de vie". Le pair envoie régulièrement son cycle de vie à des pairs sélectionnés par la DHT qui, de ce fait, surveille l'activité de ce pair.

La détection des pannes est assurée de la manière suivante : chaque pair, par exemple N8, communique à intervalles réguliers à la DHT, un message qui alimente dans la DHT le cycle de vie « LifeCycle » du pair. Cet objet est envoyé en fonction du NodeID du pair sur les plus proches voisins (N1, N21, N56, ...) (par exemple, les plus proches voisins sont ceux dont le NodeID est le plus proche de celui du pair N8) du pair NodeID N8.

Si le pair n'est pas en panne, l'objet concernant son cycle de vie se retrouve stocké chez lui et chez les k-1 pairs plus proche numériquement de son NodeID, par les mécanismes de réplication de données inhérents aux DHT (k est un paramètre qui permet de fixer la tolérance aux pannes de k-1 éléments).

Nous pouvons remarquer que si le pair se déconnecte de manière logicielle, une mise à jour de son cycle de vie est envoyée avant la déconnexion effective du pair. Ainsi, les k-1 pairs peuvent analyser dans la DHT locale (sans communication), l'état du cycle de vie du pair donné. De cette façon, chaque pair lit le cycle de vie des autres pairs associés par le routage au sein de la DHT.

Lorsqu'un pair N21 détecte une anomalie concernant le cycle de vie du pair N8 (absence de la dernière mise à jour), il en réfère aux k-1 autres pairs désignés par *l'overlay.* Le pair N21 rentre dans une phase de concertation avec les k-1 pairs et en fonction des informations qui lui sont communiquées, le pair initiateur de la requête peut déclencher ou non une reconstruction des données « perdues » du nœud N8. Cette étape de concertation peut être réalisée par un algorithme dit des généraux byzantins pour faire face à des pairs malveillants dans la prise de décision. Plusieurs phases d'échange total d'informations entre les pairs sont réalisées, dans lesquelles chacun communique son avis sur la défaillance du pair concerné. Les multiples phases permettent de détecter les pairs incohérents et de prendre une bonne décision avec un certain niveau de garantie : les algorithmes les plus connus tolèrent jusqu'à la malveillance d'au plus un tiers des pairs.

Si une reconstruction est demandée alors qu'elle n'est pas nécessaire cela n'est pas préjudiciable au système. Il faudra toutefois gérer le fait que la détection n'est pas fiable, en contrôlant constamment le processus de reconstruction.

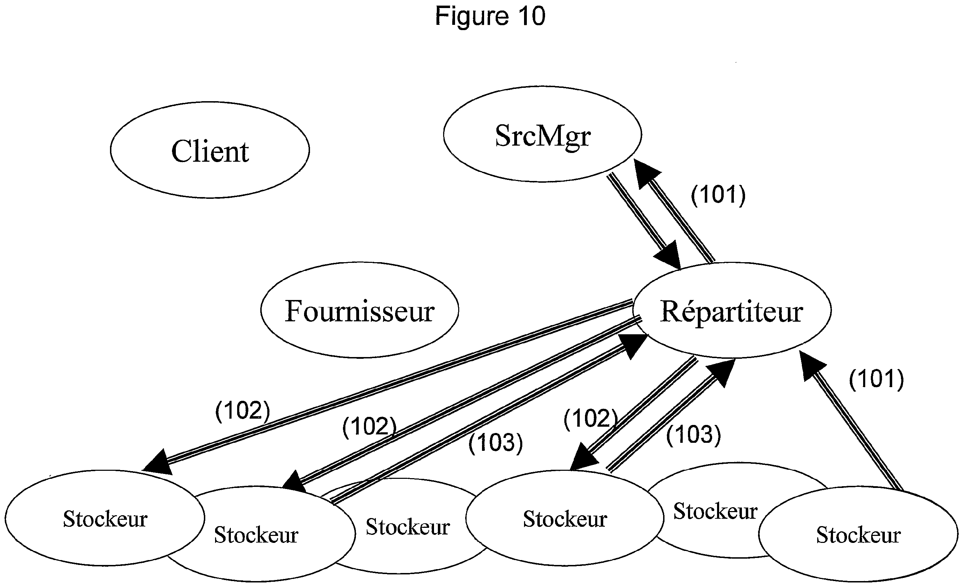

Illustrée par la figure 10, la reconstruction des données « perdues » du pair défaillant N8 est déclenchée par le pair N21 qui a détecté la panne. N21 demande (101) à la DHT les fragments que stockait le pair N8 en panne. Dans un mode de réalisation de l'invention, les mécanismes de routage et de nommage permettent que le pair détienne lui-même une partie des informations propres aux données qu'il contient et que ses proches voisins contiennent. Ainsi, cette opération ne peut nécessiter aucune communication, seulement la consultation de la table DHT.

La recherche est effectuée en fonction du NodeID du pair en panne. Une requête (102) est alors lancée pour récupérer ces fragments. Une fois la liste des fragments récupérée (103), le pair déduit l'ensemble des blocs endommagés et demande la reconstruction des fragments perdus. Ces fragments sont reconstruits grâce au mécanisme de redondance et ils sont stockés sur des pairs sélectionnés par la même méthode que lors du stockage initial du bloc. Lorsque l'opération est terminée, le pair met à jour la liste des NodeID pour le BlocID, dans la DHT.

La présente invention met également en œuvre des mécanismes annexes permettant d'accroître la sécurité du système.

Entre autres, la sécurisation des communications entre pairs concerne :
▪ la connexion des (nouveaux) pairs sur le réseau qui repose sur une liste de nœuds de confiance qui sont les serveurs dédiés ;
▪ l'identification des pairs afin d'éviter la connexion d'un nœud malveillant au réseau. Cette identification s'appuie sur les systèmes d'authentification à clé publique ;
▪ la confidentialité des transactions met en œuvre un chiffrement (chiffrement, embrouillage, transposition) des données de transaction entre les pairs par l'utilisation d'une clé secrète chiffrée par la clé publique du pair.

## Revendications

1. Procédé de sauvegarde distribuée d'un bloc B (50) de données numériques sur un réseau (2) informatique comprenant une table de hashage distribuée DHT et au moins trois noeuds NO (1), les noeuds NO (1) étant connectés audit réseau, ledit bloc B ayant un identifiant, ledit procédé comprenant une étape de division dudit bloc B (50) en r fragments F (51) de données numériques, un identifiant étant associé à chaque fragment F, ledit procédé étant **caractérisé en ce qu'**il comprend, en outre, les étapes suivantes :
- pour chaque fragment F du bloc B, une étape de stockage dudit fragment F (51) dans les ressources mémoires d'un noeud NO_{F} (1);
- une étape d'enregistrement dans les parties de la DHT contenues sur au moins deux nœuds (1), des couples (identifiant du bloc B, liste des nœuds NO_{F}) et (nœud NO_{F}, liste d'identifiants des fragments F);
de sorte qu'aucune opération sur la DHT ou opération de stockage n'est réalisée sur un serveur centralisé
- une étape de récupération dudit bloc B (50) comprenant une première étape d'envoi d'une requête du noeud (1) demandeur à la DHT, une seconde étape où la DHT lui renvoie les noeuds (1) stockant les fragments (51, 52) du bloc (50) sur la base des couples (identifiant du bloc B, liste des nœuds NO_{F}), une étape d'envoi de requête de récupération de fragments (51, 52) à ces noeuds (1) et une étape de reconstruction du bloc B (50) dès la réception de r fragments (51, 52) différents ;
- **caractérisé en ce qu'**il comprend, en outre, une étape d'envoi périodique par chacun desdits nœuds (1) d'une information d'activité à un ensemble de nœuds (1) sélectionnés par la DHT ;
- **en ce que** la DHT contient un champ « cycle de vie » et **en ce que** l'envoi de ladite information d'activité met à jour le champ « cycle de vie » dudit nœud (1), ledit champ étant présent sur l'ensemble des nœuds (1) sélectionnés par la DHT,
- **en ce qu'**il comprend, en outre, une étape de détection d'un champ « cycle de vie » non mis à jour par un noeud (1) Cₚₐₙₙₑ ; et
- une étape de reconstruction des fragments F de blocs stockées sur ledit noeud (1) en panne Cₚₐₙₙₑ sur la base du couple (nœud NO_{F},
liste d'identifiants des fragments F) et de mise à jour, dans la DHT, de la liste des noeuds (1) stockant au moins un fragment (51, 52) dudit bloc B (50) .

2. Procédé de sauvegarde distribuée selon la revendication précédente, **caractérisé en ce qu'**il comprend, suite à ladite étape de division, une étape de calcul de s fragments de redondance (52) calculés à partir desdits r fragments F (51).

3. Procédé de sauvegarde distribuée selon la revendication précédente, **caractérisé en ce que** lesdits fragments (51, 52) sont stockées, lors de l'étape de stockage, sur des nœuds (1) tous différents.

4. Procédé de sauvegarde distribuée selon l'une des revendications précédentes, **caractérisé en ce que** la DHT ne contient que des données de contrôle et aucun fragment (51, 52) de données.

5. Procédé de sauvegarde distribuée selon la revendication précédente, **caractérisé en ce que** les fragments (51, 52) reconstruits lors de ladite étape de reconstruction sont stockés chacun sur au moins un autre nœud (1) sain.

6. Dispositif (30) de sauvegarde distribuée de données pour la mise en œuvre du procédé selon l'une quelconque des revendications précédentes comprenant un processeur (31), une mémoire de stockage (32), des moyens de connexion (36) au réseau (2) et des moyens de contrôle des données distribuées (34, 35), du type table de hashage distribuée DHT.

7. Dispositif de sauvegarde distribuée selon la revendication précédente, **caractérisé en ce qu'**il est sous forme d'un boîtier externe apte à s'ajouter à un poste informatique déjà existant.

8. Système de sauvegarde distribuée comprenant au moins deux dispositifs selon l'une quelconque des revendications 6 ou 7, lesdits dispositifs (30) étant connectés entre eux par un réseau (2) informatique.

9. Système de sauvegarde distribuée selon la revendication précédente, **caractérisé en ce que** ledit système comprend une pluralité de dispositifs (30) selon l'une des revendications 6 ou 7, lesdits dispositifs (30) étant connectés à plusieurs réseaux (2) interconnectés.

## Patentansprüche

1. Verfahren zur verteilten Sicherung eines Satzes B (50) digitaler Daten in einem Computernetzwerk (2), eine verteilte Hash-Tabelle DHT und mindestens drei Knoten NO (1) umfassend, wobei die Knoten NO (1) mit dem Netzwerk verbunden sind, wobei der Satz B eine Kennung aufweist, wobei das Verfahren einen Schritt zum Teilen des Satzes B (50) in r Fragmente F (51) digitaler Daten umfasst, wobei jedem Fragment F eine Kennung zugeordnet ist, wobei das Verfahren **dadurch gekennzeichnet ist, dass** es weiter die folgenden Schritte umfasst:
- für jedes Fragment F des Satzes B, einen Schritt des Speicherns des Fragments F (51) in den Speicherressourcen eines Knotens NO_{F} (1);
- einen Registrierungsschritt in den Teilen der DHT, die in mindestens zwei Knoten (1) enthalten sind, der Paare (Kennung des Satzes B, Liste der Knoten NO_{F}) und (Knoten NO_{F}, Kennungsliste der Fragmente F) ;
sodass keine Operation in der DHT oder Speicheroperation auf einem zentralen Server durchgeführt wird
- einen Abrufschritt des Satzes B (50), umfassend einen ersten Sendeschritt einer Anfrage des Antragstellerknotens (1) an die DHT, einen zweiten Schritt, bei dem die DHT ihm die Knoten (1) zurückschickt, die die Fragmente (51, 52) des Satzes (50) speichern, auf der Basis der Paare (Kennung des Satzes B, Liste der Knoten NO_{F}), einen Anfragesendeschritt zum Abrufen von Fragmenten (51, 52) an diese Knoten (1) und einen Rekonstruktionsschritt des Satzes B (50) ab dem Empfang von r unterschiedlichen Fragmenten (51, 52);
- **dadurch gekennzeichnet, dass** es weiter einen periodischen Sendeschritt durch jeden der Knoten (1) einer Aktivitätsinformation an eine Reihe von Knoten (1) umfasst, die von der DHT ausgewählt werden;
- dadurch, dass die DHT ein Feld "Lebenszyklus" enthält, und dadurch, dass das Senden der Aktivitätsinformation das Feld "Lebenszyklus" des Knotens (1) aktualisiert, wobei das Feld in der Reihe der Knoten (1) vorhanden ist, die von der DHT ausgewählt werden;
- dadurch, dass es weiter einen Erkennungsschritt eines durch einen Knoten (1) C_{Panne} nicht aktualisierten Feldes "Lebenszyklus" umfasst; und
- einen Schritt zum Rekonstruieren der Fragmente F von Sätzen, die in dem fehlerhaften Knoten (1) C_{Panne} gespeichert sind, auf der Basis des Paares (Knoten NO_{F'}, Kennungsliste der Fragmente F') und Aktualisieren, in der DHT, der Liste der Knoten (1), die mindestens ein Fragment (51, 52) des Satzes B (50) speichert.

2. Verfahren zur verteilten Sicherung nach dem vorstehenden Anspruch, **dadurch gekennzeichnet, dass** es nach dem Schritt zum Teilen einen Schritt zum Berechnen von s Redundanzfragmenten (52) umfasst, die aus den r Fragmenten F (51) berechnet werden.

3. Verfahren zur verteilten Sicherung nach dem vorstehenden Anspruch, **dadurch gekennzeichnet, dass** die Fragmente (51, 52) beim Schritt zum Speichern in den Knoten (1) gespeichert werden, die allesamt unterschiedlich sind.

4. Verfahren zur verteilten Sicherung nach einem der vorstehenden Ansprüche, **dadurch gekennzeichnet, dass** die DHT nur Kontrolldaten und kein Datenfragment (51, 52) enthält.

5. Verfahren zur verteilten Sicherung nach dem vorstehenden Anspruch, **dadurch gekennzeichnet, dass** die im Schritt zum Rekonstruieren rekonstruierten Fragmente (51, 52) jeweils in mindestens einem anderen einwandfreien Knoten (1) gespeichert werden.

6. Vorrichtung (30) zur verteilten Sicherung von Daten zur Umsetzung des Verfahrens nach einem der vorstehenden Ansprüche, umfassend einen Prozessor (31), einen Speicher (32), Verbindungsmittel (36) mit dem Netzwerk (2) und Kontrollmittel der verteilten Daten (34, 35) in der Art einer verteilten Hash-Tabelle DHT.

7. Vorrichtung zur verteilten Sicherung nach dem vorstehenden Anspruch, **dadurch gekennzeichnet, dass** sie in Form eines externen Gehäuses ist, das imstande ist, zu einem bereits bestehenden Computerarbeitsplatz hinzugefügt zu werden.

8. System zur verteilten Sicherung, mindestens zwei Vorrichtungen nach einem der Ansprüche 6 oder 7 umfassend, wobei die Vorrichtungen (30) durch ein Computernetzwerk (2) miteinander verbunden sind.

9. System zur verteilten Sicherung nach dem vorstehenden Anspruch, **dadurch gekennzeichnet, dass** das System eine Vielzahl von Vorrichtungen (30) nach einem der Ansprüche 6 oder 7 umfasst, wobei die Vorrichtungen (30) mit mehreren miteinander verbundenen Netzwerken (2) verbunden sind.

## Claims

1. Method for the distributed backup of a block B (50) of digital data in a computer network (2) comprising a distributed hash table DHT and at least three nodes NO (1), the nodes NO (1) being connected to said network, said block B having an identifier, said method comprising a step of dividing said block B (50) into r fragments F (51) of digital data, an identifier being associated with each fragment F, said method being **characterised in that** it further comprises the following steps:
- for each fragment F of the block B, a step of storing said fragment F (51) in the memory resources of a node NO_{F} (1) ;
- a step of recording the pairs (identifier of the block B, list of the nodes NO_{F}) and (node NO_{F}, list of identifiers of the fragments F) in the parts of the DHT that are contained in at least two nodes (1);
such that no operation on the DHT or any storage operation is implemented on a centralised server
- a step of recovering said block B (50) comprising a first step of sending a request from the requesting node (1) to the DHT, a second step in which the DHT returns thereto the nodes (1) storing the fragments (51, 52) of the block (50) on the basis of the pairs (identifier of the block B, list of the nodes NO_{F}), a step of sending a request for recovering fragments (51, 52) to these nodes (1), and a step of reconstructing the block B (50) as soon as r different fragments (51, 52) have been received;
- **characterised in that** it further comprises a step of periodically sending activity information from each of said nodes (1) to a set of nodes (1) selected by the DHT;
- **in that** the DHT contains a "life cycle" field and **in that** the sending of said activity information updates the "life cycle" field of said node (1), said field being present in all of the nodes (1) selected by the DHT,
- **in that** it further comprises a step of detecting a "life cycle" field that is not updated by a node C_{failed} (1); and
- a step of reconstructing the fragments F of blocks stored in said failed node C_{failed} (1) on the basis of the pair (node NO_{F}, list of identifiers of the fragments F) and of updating, in the DHT, the list of the nodes (1) storing at least one fragment (51, 52) of said block B (50) .

2. Distributed backup method according to the preceding claim, **characterised in that** it comprises, following said division step, a step of computing s redundancy fragments (52) computed on the basis of said r fragments F (51).

3. Distributed backup method according to the preceding claim, **characterised in that** said fragments (51, 52) are stored, in the storage step, in nodes (1) that are all different from one another.

4. Distributed backup method according to one of the preceding claims, **characterised in that** the DHT only contains check data and no data fragments (51, 52).

5. Distributed backup method according to the preceding claim, **characterised in that** each of the fragments (51, 52) reconstructed in said reconstruction step is stored in at least one other healthy node (1).

6. Distributed data backup device (30) for implementing the method according to any of the preceding claims, comprising a processor (31), a storage memory (32), means (36) for connecting to the network (2) and means for controlling the distributed data (34, 35), of the distributed hash table DHT type.

7. Distributed backup device according to the preceding claim, **characterised in that** it takes the form of an external box that can be added to an existing computer workstation.

8. Distributed backup system comprising at least two devices according to any of claims 6 or 7, said devices (30) being connected to one another via a computer network (2).

9. Distributed backup system according to the preceding claim, **characterised in that** said system comprises a plurality of devices (30) according to one of claims 6 or 7, said devices (30) being connected to a plurality of interconnected networks (2).
